# EUROPÄISCHE PATENTANMELDUNG

(11) **EP 2 789 826 A1**
(43) Veröffentlichungstag der Anmeldung: **15.10.2014**
(21) Anmeldenummer: 14159122.2
(22) Anmeldetag: 12.03.2014
(51) Int. Cl.: F02B 63/04, F01N 5/04, F02B 37/00, F02B 37/04, F02B 37/18, F02B 39/10, F02B 33/40

(54) **Antriebssystem**

(30) Priorität: 12.04.2013 CH 7712013
(71) Anmelder: Liebherr Machines Bulle SA, 1630 Bulle (CH)
(72) Erfinder: Seba, Bouzid, 1636 Broc (CH); Dettmann, Tobias, 19303 Rüterberg (DE); Engeter, Daniel, 90411 Nürnberg (DE); Gay, Benoît, 1752 Villar-sur-Glâne (CH)
(74) Vertreter: Laufhütte, Dieter

(57) **Zusammenfassung**

Die Erfindung betrifft ein Antriebssystem mit einem Verbrennungsmotor (1), einem Abgasturbolader (2) aus einer Turbine (4) und einem von der Turbine angetriebenen Verdichter (3), und mit einem Turbogenerator (5), wobei der Turbogenerator (5) parallel zur Turbine (4) des Abgasturboladers im Abgasstrang (11) des Verbrennungsmotors angeordnet ist.

## Beschreibung

Die vorliegende Erfindung betrifft ein Antriebssystem mit einem Verbrennungsmotor, mit einem Abgasturbolader aus einer Turbine und einem von der Turbine angetriebenen Verdichter, und mit einem Turbogenerator.

Ein solches Antriebssystem ist aus der WO 2009/022109 A2 bekannt. Dabei ist im Abgasstrang nach der Turbine des Abgasturboladers ein Turbogenerator angeordnet. Der Turbogenerator wird dabei durch das von der Turbine kommende Abgas angetrieben und erzeugt elektrische Energie. Hierdurch kann die Energieeffizienz des Antriebssystems erhöht werden.

Aufgabe der vorliegenden Erfindung ist es, ein solches Antriebssystem weiterzuentwickeln.

Diese Aufgabe wird erfindungsgemäß durch ein Antriebssystem gemäß Anspruch 1 gelöst.

Das erfindungsgemäße Antriebssystem umfasst einen Verbrennungsmotor, welcher mit einem Abgasturbolader aus einer Turbine und einem von der Turbine angetriebenen Verdichter ausgestattet ist. Weiterhin ist ein Turbogenerator vorgesehen, welcher erfindungsgemäß parallel zur Turbine des Abgasturboladers im Abgasstrang des Verbrennungsmotors angeordnet ist. Erfindungsgemäß kann es sich bei dem Verbrennungsmotor des erfindungsgemäßen Antriebssystems insbesondere um einen Dieselmotor oder um einen Ottomotor handeln. In einem bevorzugten Ausführungsbeispiel handelt es sich bei dem Verbrennungsmotor dabei um einen Gasmotor. Bevorzugt arbeitet dieser als Ottomotor.

Durch die parallele Anordnung des Abgasturboladers werden zum einen die Möglichkeiten der Ansteuerung des Gesamtsystems durch eine Ansteuerung des Abgasturboladers verbessert. Weiterhin wird der Gesamtwirkungsgrad des Antriebssystems erhöht:

Zwar wird bei der erfindungsgemäßen parallelen Anordnung der Turbine des Abgasturboladers zu der Turbine des Turbogenerators nicht mehr der gesamte Abgasstrom des Verbrennungsmotors zum Turbogenerator geleitet. Dies könnte auf den ersten Blick zu der Annahme verleiten, dass durch die parallele Anordnung des Turbogenerators die Energieeffizienz gegenüber einer seriellen Anordnung sinkt.

Die Erfinder der vorliegenden Erfindung haben jedoch erkannt, dass die parallele Anordnung des Turbogenerators auf Grund einer Reihe von Wechselwirkungen zwischen den Komponenten des Antriebssystems energetische Vorteile gegenüber der seriellen Anordnung aufweist.

Entscheidend ist dabei der Gesamtwirkungsgrad aus dem Verbund aus Verbrennungsmotor und Turbogenerator. Zwar mag in einer seriellen Anordnung der Anteil des Turbogenerators an der Gesamtleistung höher sein. Der isentropische Wirkungsgrad der Expansion im Turbogenerator ist jedoch abhängig von der Temperatur, wobei der Wirkungsgrad des Turbogenerators umso höher ist, je höher die Temperatur ist. Da die Temperatur des Abgases am Turbogenerator bei der erfindungsgemäßen parallelen Anordnung höher ist, ist der Wirkungsgrad höher, was den geringeren Massenstrom zumindest teilweise ausgleicht.

Weiterhin verschlechtert sich der Wirkungsgrad des Verbrennungsmotors bei steigendem Abgasgegendruck. Der Abgasgegendruck ist bei der erfindungsgemäßen parallelen Anordnung des Turbogenerators jedoch niedriger als bei einer seriellen Anordnung, so dass auch der Wirkungsgrad des Verbrennungsmotors verbessert wird.

Die erfindungsgemäße parallele Anordnung des Turbogenerators führt damit sowohl zu einem höheren Wirkungsgrad des Turbogenerators auf Grund der höheren Temperatur des Abgases, als auch zu einem höheren Wirkungsgrad des Verbrennungsmotors auf Grund des geringeren Abgasgegendrucks.

Als weiterer Effekt kommt hinzu, dass der Druck nach der Turbine des Abgasturboladers im Vergleich zur seriellen Anordnung des Turbogenerators niedriger ist. Hierdurch wird wiederum die Turboladerleistung erhöht. Insbesondere wird so bei einem gleichbleibenden Gegendruck für den Motor das Druckverhältnis über die Turbine sowohl des Abgasturboladers, als auch über die Turbine des Turbogenerators erhöht.

Weiterhin ist durch die parallele Anordnung des Turbogenerators eine bessere Dynamik gegeben, welche zur besseren Abstimmung mit dem Abgasturbolader oder zur schnelleren Steuerung des Motors eingesetzt werden kann.

Dabei ist es aus dem Stand der Technik bereits bekannt, einen Bypass zur Turbine eines Abgasturboladers vorzusehen und den Luftstrom durch diesen Bypass zu regeln, um hierdurch den Verbrennungsmotor anzusteuern, und/oder um in einem höheren Wirkungsgradbereich des Abgasturboladers arbeiten zu können. Dieser Bypass wird üblicherweise als Waste-Gate bezeichnet. Erfindungsgemäß ist nun der Turbogenerator in diesem Waste-Gate angeordnet.

Dabei kann der Turbogenerator an Stelle oder zusätzlich zu einer Ventil- bzw. Klappenanordnung zur Steuerung des Abgasstroms durch das Waste-Gate eingesetzt werden.

Wird der Turbogenerator zusätzlich zu einer Ventil- bzw. Klappenanordnung im Waste-Gate eingesetzt, wird die Ventil- bzw. Klappenanordnung bevorzugt dazu eingesetzt, um bei einer Drehzahl von Null des Turbogenerator den eventuell noch vorhandenen Schlupfstrom durch den Turbogenerator ganz zu eliminieren. Bevorzugt ist die Ventil- bzw. Klappenanordnung dabei bei einer Drehzahl des Turbogenerators über einer bestimmten Mindestdrehzahl oder bei einer Drehzahl größer Null komplett geöffnet. Bevorzugt ist hierfür eine entsprechende Steuerung für die Ventil- bzw. Klappenanordnung vorgesehen.

Der erfindungsgemäße Turbogenerator umfasst eine Turbine, welche einen elektrischen Generator antreibt. Vorzugsweise weißt das Antriebssystem dabei eine Steuerung auf, welche den Turbogenerator ansteuert. Insbesondere kann die Steuerung dabei die Drehzahl des Turbogenerators ansteuern. Bevorzugt erfolgt die Ansteuerung dabei durch eine Ansteuerung der Leistungselektronik des Generators. Dabei kann durch eine Erhöhung der elektrischen Last, welche der Generator sieht, die Drehzahl des Turbogenerators gesteuert werden.

Bevorzugt steuert die Steuerung dabei den Turbogenerator in Abhängigkeit von Betriebsparametern des Verbrennungsmotors und/oder des Abgasturboladers an. Eingangsgrößen der Ansteuerung können dabei beispielsweise der Druck und/oder die Temperatur im Abgasstrang vor der Turbine des Abgasturboladers sein und/oder der Druck und/oder die Temperatur im Ladeluftstrang nach dem Verdichter des Abgasturbiladers. Als weitere Eingangsgröße der Steuerung kann die Drehzahl des Abgasturboladers dienen. Weitere Eingangsgrößen können die Drehzahl und/oder das Drehmoment des Verbrennungsmotors sein.

Bevorzugt sorgt die erfindungsgemäße Steuerung dabei dafür, dass der Abgasturbolader in einem Bereich mit einem hohen Wirkungsgrad arbeiten kann. Weiterhin kann die Steuerung so ausgestaltet sein, dass der Betriebspunkt des Abgasturboladers auf den Betriebspunkt des Verbrennungsmotors abgestimmt wird.

Weiterhin kann auch die Motorsteuerung so ausgeführt sein, dass sie den Turbogenerator zur Ansteuerung des Verbrennungsmotors heranzieht. Bevorzugt stellt die Motorsteuerung dabei den Massenstrom durch den Verbrennungsmotor und/oder den Ladedruck des Verbrennungsmotors durch Ansteuerung des Turbogenerators ein.

Dabei kann der erfindungsgemäß parallel geschaltete Turbogenerator die einzige Regeleinrichtung für den Luftmassestrom durch den Verbrennungsmotor und/oder den Ladedruck des Verbrennungsmotors darstellen. Insbesondere kann dies bei einem Ottomotor umgesetzt werden. Durch den Verzicht auf eine Drosselklappe können die Strömungsverluste im Luftpfad verringert werden.

Gegebenenfalls kann jedoch weiterhin zusätzlich zum Turbogenerator eine Drosselklappe vorgesehen sein, wobei der Massenstrom durch den Verbrennungsmotor bevorzugt durch eine aufeinander abgestimmte Ansteuerung des Turbogenerators und der Drosselklappe erfolgt.

Die Steuerung kann dabei so ausgelegt sein, dass bei einer gewünschten Leistungssteigerung des Verbrennungsmotors die Drehzahl des Turbogenerators verringert wird. Hierdurch erhöht sich der Massenstrom durch die Turbine des Abgasturboladers und damit der Ladedruck des Verbrennungsmotors, so dass sich die Leistung des Verbrennungsmotores erhöht.

Dabei sinkt bei verringerter Drehzahl die Leistung des Turbogenerators, während die Leistung des Verbrennungsmotors steigt.

In der Steuerung des erfindungsgemäßen Antriebssystems können dabei ein oder mehrere Kennfelder abgelegt sein, anhand welcher die Drehzahl des Turbogenerators angesteuert wird. Bevorzugt wird hierdurch ein Betriebspunkt mit höherer Gesamtleistung und/oder besserer Kraftstoffeffizienz eingestellt. Eingangsgrößen können dabei Ladedruck und Ladetemperatur und/oder Abgasgegendruck und Abgasgegentemperatur sein. Stellgröße ist dabei die Optimaldrehzahl des Turbogenerators. Weiterhin kann die Dynamik des Verbrennungsmotors durch eine entsprechende Ansteuerung des Turbogenerators unterstützt werden.

In einer weiteren Ausführung des erfindungsgemäßen Antriebssystems kann ein über einen Elektromotor angetriebener Kompressor im Ladeluftstrang angeordnet sein. Dieser zusätzliche Kompressor ermöglicht eine von der Drehzahl des Verbrennungsmotors unabhängige Einstellung des Ladedrucks.

Erfindungsgemäß kann der zusätzliche Kompressor stromaufwärts zum Verdichter des Abgasturboladers im Ladeluftstrang angeordnet sein.

Bevorzugt wird die von dem erfindungsgemäßen Turbogenerator erzeugte elektrische Energie in einer Batterie gespeichert. Dabei kann die in der Batterie gespeicherte Energie dazu herangezogen werden, um eine oder mehrere elektrische Komponenten anzutreiben. Insbesondere kann dabei der zusätzliche Kompressor im Ladeluftstrang durch die vom Turbogenerator erzeugte elektrische Energie angetrieben werden.

Gemäß einer Ausgestaltung der vorliegenden Erfindung kann der erfindungsgemäße Turbogenerator die sonst übliche Lichtmaschine, d. h. einen vom Verbrennungsmotor angetriebenen Generator zur Erzeugung von elektrischer Energie, komplett ersetzen. In einer anderen Ausgestaltung wird ein Turbogenerator dagegen mit einer Lichtmaschine, d. h. einem direkt vom Verbrennungsmotor mechanisch angetriebenen Generator, kombiniert. Durch den erfindungsgemäßen Turbogenerator steht dabei eine höhere elektrische Leistung zur Verfügung. Vorteilhafterweise wird dabei die Energie des Turbogenerators und der Lichtmaschine in einer gemeinsamen Batterieeinheit gespeichert.

Weiterhin kann in einer bevorzugten Ausführung der vorliegenden Erfindung das Kühlsystem des Turbogenerators an das Kühlsystem des Verbrennungsmotors und/oder des Abgasturboladers angeschlossen sein. Insbesondere kann dabei der Turbogenerator parallel zum Verbrennungsmotor und/oder zum Abgasturbolader in einen Kühlmittelkreislauf eines Kühlsystems eingebunden sein.

Weiterhin kann das Schmiermittelsystem des Turbogenerators an das Schmiermittelsystem des Verbrennungsmotors und/oder des Abgasturboladers angeschlossen sein. Auch hier kann vorgesehen sein, dass der Turbogenerator parallel oder seriell zum Verbrennungsmotor oder Abgasturbolader in dem Fluidkreislauf des Schmiermittelsystems eingebunden ist.

Hierdurch kann auf eine zusätzliche Kühl- bzw. Schmiermittelversorgung verzichtet werden.

Das erfindungsgemäße Antriebssystem kann dabei zum Antrieb beliebiger Vorrichtungen eingesetzt werden.

In einem möglichen Anwendungsfall treibt der Verbrennungsmotor des erfindungsgemäßen Antriebssystems ein Hydrauliksystem an. Insbesondere kann der Verbrennungsmotor dabei eine oder mehrere Hydraulikpumpen des Hydrauliksystems antreiben. Bei dem Hydrauliksystem kann es sich dabei insbesondere um eine Arbeits- und/oder eine Fahrhydraulik handeln. Insbesondere kann es sich dabei um eine Arbeits- und/oder eine Fahrhydraulik eines mobilen Arbeitsgeräts oder Fahrzeugs handeln.

Das Antriebssystem kann dabei eine Steuerung des Hydrauliksystems aufweisen, welche die Leistungsaufnahme und/oder -abgabe des Hydrauliksystems ansteuert, wobei die Ansteuerung insbesondere durch Ansteuerung einer Verstellpumpe und/oder eines Verstellmotors und/oder einer Ventilsteuerung des Hydrauliksystems erfolgt.

Der Verbrennungsmotor kann bei dieser Anwendung so angesteuert werden, dass er mit einer konstanten Soll-Drehzahl arbeitet. Die Soll-Drehzahl kann dabei zur Einstellung der Dynamikreserve über eine Steuerung einstellbar sein.

In dieser Ausführung der vorliegenden Erfindung wird dabei bevorzugt das Drehmoment des Verbrennungsmotors in Abhängigkeit von der gewünschten Leistung eingestellt.

In einer alternativen Ausführung der vorliegenden Erfindung kann dagegen die Drehzahl des Verbrennungsmotors in Abhängigkeit von der gewünschten Leistung eingestellt werden.

In einem erfindungsgemäßen Anwendungsfall treibt der Verbrennungsmotor des erfindungsgemäßen Antriebssystems ein Fahrwerk an. Insbesondere kann der Antrieb dabei durch einen mechanischen Antriebsstrang erfolgen. Bevorzugt wird dabei die Drehzahl und/oder das Drehmoment des Verbrennungsmotors in Abhängigkeit einer Vorgabe des Fahrers angesteuert.

In einem weiteren erfindungsgemäßen Anwendungsfall treibt der Verbrennungsmotor des erfindungsgemäßen Antriebssystems einen Generator an, welcher elektrische Energie erzeugt. Bei einer solchen Anwendung ist eine hohe Kraftstoffeffizienz von besonderer Bedeutung. Insbesondere handelt es sich dabei um eine stationäre Anwendung.

Insbesondere kann es sich bei dem Verbrennungsmotor dabei um einen Gasmotor handeln. Der Gasmotor kann dabei über eine Versorgungsleitung mit einem Gastank und/oder einem Gasversorgungsnetz in Verbindung stehen.

Neben dem erfindungsgemäßen Antriebssystem umfasst die vorliegende Erfindung weiterhin eine Kombination aus einem Abgasturbolader und einem Turbogenerator für ein Antriebssystem, wie es oben beschrieben wurde. Weiterhin kann dabei eine Steuerung zur Ansteuerung des Abgasturboladers vorgesehen sein.

Bevorzugt sind Abgasturbolader, Turbogenerator und/oder Steuerung dabei so ausgeführt, wie dies bereits oben näher beschrieben wurde.

Die vorliegende Erfindung umfasst weiterhin ein fahrbares Arbeitsgerät und/oder ein Fahrzeug mit einem Antriebssystem, wie es oben dargestellt wurde.

Dabei kann das Antriebssystem zum Antrieb eines Fahrwerks und/oder einer Arbeitsausrüstung dienen. Weiterhin kann das Antriebssystem mindestens eine Hydraulikpumpe eines Hydrauliksystems antreiben. Dabei kann das Hydrauliksystem wiederum zum Antrieb eines Fahrwerks und/oder einer Arbeitsausrüstung dienen.

Bei dem fahrbaren Arbeitsgerät kann es sich insbesondere um eine Erdbewegungsmaschine und/oder eine Transportmaschine und/oder eine Umschlagmaschine handeln. Insbesondere kann die vorliegende Erfindung dabei bei einem Kran oder Bagger zum Einsatz kommen.

Die vorliegende Erfindung umfasst weiterhin stationäres Arbeitssystem mit einem Antriebssystem, wie es oben beschrieben wurde. Bevorzugt treibt der Verbrennungsmotor dabei einen Generator an. Insbesondere kann es sich bei dem Verbrennungsmotor dabei um einen Gasmotor handeln.

Die vorliegende Erfindung wird nun anhand von Ausführungsbeispielen sowie Zeichnungen näher dargestellt.

Dabei zeigen:
- Fig. 1:: ein erstes Ausführungsbeispiel eines erfindungsgemäßen Antriebsystems mit einem im Waste-Gate angeordneten Turbogenerator,
- Fig. 2:: ein Diagramm, welches die Leistung eines Turbogenerators bei konstantem Differenzdruck in Abhängigkeit von der Eintrittstemperatur darstellt,
- Fig. 3:: ein zweites Ausführungsbeispiel eines erfindungsgemäßen Antriebssystems, bei welchem der Turbogenerator in den Kühl- und den Ölkreislauf des Verbrennungsmotors integriert ist,
- Fig. 4:: ein drittes Ausführungsbeispiel eines erfindungsgemäßen Antriebssystems, bei welchem ein zusätzlicher, über einen Elektromotor angetriebener Kompressor im Ladeluftstrang vorgesehen ist.

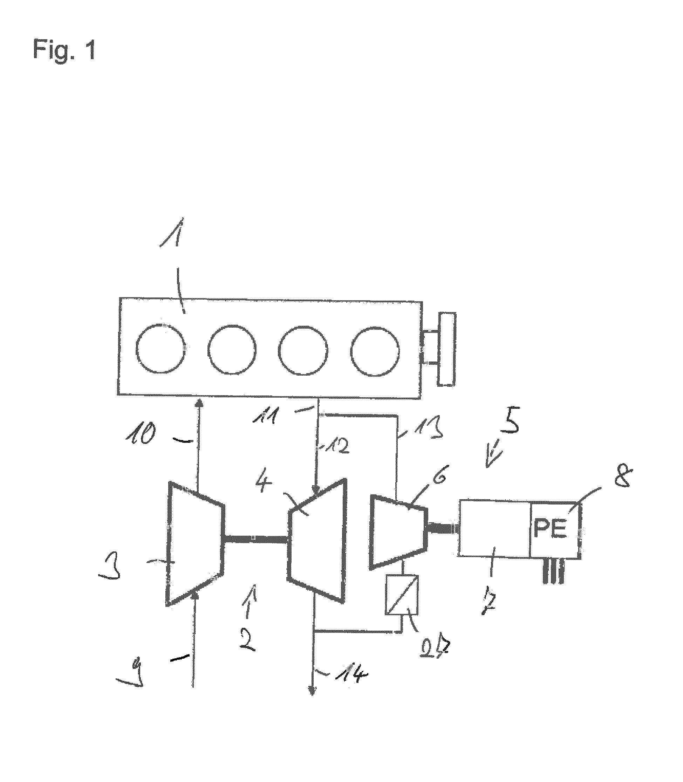

Fig. 1 zeigt ein Ausführungsbeispiel eines erfindungsgemäßen Antriebssystems mit einem Verbrennungsmotor 1, welcher mit einem Abgasturbolader 2 ausgestattet ist. Der Abgasturbolader 2 umfasst dabei eine im Abgasstrang angeordnete Turbine 4, welche den im Ladeluftstrang angeordneten Verdichter 3 antreibt. Hierfür sitzen Turbine 4 und Verdichter 3 üblicherweise auf der gleichen Welle. Der Verdichter 3 saugt dabei über die Leitung 9 Ladeluft an und gibt diese unter Druck über die Leitung 10 zum Verbrennungsmotor 1. Das Abgas des Verbrennungsmotors wird dann über die Leitung 11 und 12 auf die Turbine 4 geleitet, von wo aus das Abgas über die Ableitung 14 abgeführt wird.

Erfindungsgemäß ist parallel zur Turbine 4 im Abgasstrang der Turbogenerator 5 angeordnet. Dieser weißt eine im Abgasstrang angeordnete Turbine 6 auf, welche ein Generator 7 antreibt. Der Generator 7 erzeugt so aus der Drehbewegung der Turbine 6 elektrische Energie, welche beispielweise in einer Batterie zwischengespeichert werden kann. Der Generator 7 wird dabei über eine Leistungselektronik 8 angesteuert.

Die Turbine 6 des Turbogenerators 5 ist erfindungsgemäß in einem Bypass 13 der Turbine 4 des Abgasturboladers angeordnet. Dieser Bypass wird üblicherweise als Waste-Gate bezeichnet. Dabei zweigt der Bypass 13 stromaufwärts Turbine 4 von der Abgaszuleitung 11 zum Abgasturbolader ab und wird stromabwärts der Turbine 4 wieder zur Abgasableitung 14 des Abgasturboladers geführt.

Der parallel zur Turbine des Abgasturboladers angeordnete Turbogenerator ermöglicht dabei eine Verbesserung des Gesamtwirkungsgrades des Verbundes aus Verbrennungsmotor und Turbogenerator:

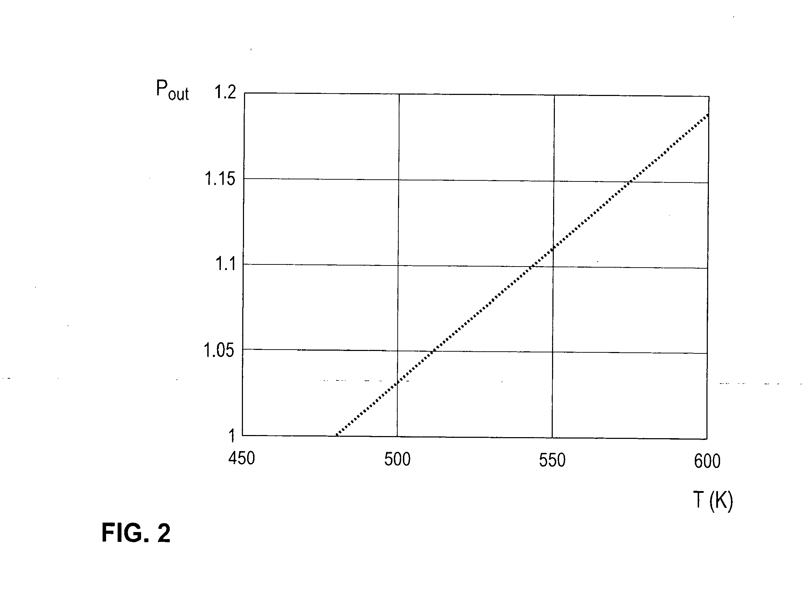

Entscheidend ist dabei der Gesamtwirkungsgrad aus dem Verbund aus Verbrennungsmotor und Turbogenerator. In einer seriellen Anordnung des Turbogenerators ist der Anteil des Turbogenerators an der Gesamtleistung höher. Der isentropische Wirkungsgrad der Expansion im Turbogenerator ist jedoch abhängig von der Temperatur. Dabei ist in Fig. 2 die Abhängigkeit der Ausgangsleistung Pₒᵤₜ des Turbogenerators bei konstantem Druck in Abhängigkeit von der Eintrittstemperatur T der Abgase in den Turbogenerator gezeigt. Wie aus dem Diagramm deutlich wird, steigt die Ausgangsleistung mit der Temperatur.

Durch die erfindungsgemäße parallele Anordnung des Turbogenerators im Waste-Gate-Pfad ist die Temperatur des Abgases im Vergleich zu einer seriellen Anordnung höher, der Massenstrom allerdings geringer. Damit hat der Generator zwar einen geringeren Anteil an der Gesamtleistung. Der Gesamtwirkungsgrad ist jedoch höher bzw. der Verbrauch des Motors bei gleicher Leistung geringer. Dies ist auch darauf zurückzuführen, dass der Wirkungsgrad des Verbrennungsmotors sich mit steigendem Abgasgegendruck verschlechtert. Durch die erfindungsgemäße parallele Anordnung wird der Abgasgegendruck im Vergleich zu einer seriellen Anordnung jedoch verringert, sodass auch der Wirkungsgrad des Verbrennungsmotors erhöht wird.

Erfindungsgemäß kommen damit zwei Faktoren zusammen, welche den Wirkungsgrad des Gesamtsystems verbessern: zum einen der höhere Wirkungsgrad des Turbogenerators auf Grund der höheren Temperatur, und zum anderen der höhere Wirkungsgrad des Motors auf Grund des geringeren Abgasgegendrucks.

Als weiterer Vorteil der parallelen Anordnung des Turbogenerators wird auch die Leistung des Turboladers verbessert: Entscheidend für die Turboladerleistung ist dabei das Druckverhältnis über die Turbine. Erfindungsgemäß ist nun der Druck nach der Turbine 4 des Abgasturboleiters im Vergleich zur seriellen Lösung geringer.

Bei gleicher Turboladerleistung und somit gleichbleibenden Druckverhältnis x über die Turbine des Turboladers erhöht bzw. verringert sich der Druck vor der Turbine, d. h .der Gegendruck für den Motor, dabei um den x-fachen Wert der Druckerhöhung bzw. -verringerung nach der Turbine. Erzeugt damit ein seriell geschalteter Turbogenerator einen Staudruck p0, muss der Gegendruck p1 für den Motor bei einem Druckverhältnis x um x*p0 steigen. Erzeugt der Turbogenerator damit z. B. einen Staudruck von 1 bar, muss der Gegendruck für den Motor bei p1/p0=3 um 3 bar steigen.

Bei parallel geschaltetem Turbogenerator ist eine solche Vervielfachung des Staudrucks des Turbogenerators dagegen von vornherein ausgeschlossen. Im Gegenteil führt bei einem steigenden Massenstrom durch den Turbogenerator dieser zu einer Verringerung des Gegendrucks für den Motor. Dieser Umstand kann zum einen ausgenutzt werden, um den Wirkungsgrad des Verbrennungsmotors zu verbessern. Alternativ oder zusätzlich kann bei gleichem Staudruck für den Motor ein höheres Druckverhältnis über die Turbine des Turboladers eingesetzt werden, was die Leistung des Turboladers erhöht.

Weiterhin kann erfindungsgemäß der Massenstrom durch den Waste-Gate-Pfad über die Drehzahl der Turbine des Turbogenerators geregelt werden. Hierdurch kann eine zusätzliche Regeleinrichtung im Waste-Gate-Pfad, beispielsweise eine Waste-Gate-Klappe, entfallen. Die Regelung kann vielmehr durch den Turbogenerator 6 übernommen werden.

In einer alternativen Ausführungsform kann die Regelung über den Turbogenerator jedoch auch mit einer Waste-Gate-Klappe 27, wie dies in Fig. 1 dargestellt ist, kombiniert werden.

Dabei ist der Strom durch den Waste-Gate-Pfad von der Turbinendrehzahl abhängig, welcher wiederum den Strom durch die Turbine 4 des Abgasturboladers beeinflusst. Somit kann der Ladedruck des Verbrennungsmotors 1 über die Drehzahl der Turbine 6 des Turbogenerators 5 eingeregelt werden.

Der Durchfluss durch die Turbine des Turbogenerators ist dabei direkt proportional zur Drehzahl. Wenn daher nur ein geringer Massenstrom durch die Turbine 6 des Turbogenerators 5 erwünscht ist, wird die Drehzahl des Turbogenerators entsprechend verringert. Hierdurch sieht die Turbine 4 des Abgasturboladers einen höheren Massenstrom, was wiederum zu einer höheren Leistung des Verbrennungsmotores 1 führt. Dabei besteht durch das Waste-Gate die Möglichkeit, in einem höheren Wirkungsgradbereich des Abgasturbolader-Kennfeldes zu arbeiten.

Bei einer gewünschten Leistungsreduktion des Verbrennungsmotors 1 kann dabei die Drehzahl des Turbogenerators 5 erhöht werden. Hierdurch erhöht sich der Massenstrom durch die Turbine 6 des Turbogenerators 5, während die Turbine 4 des Abgasturboladers einen niedrigeren Massenstrom sieht. Hierdurch verringert sich der Ladedruck und damit die Leistung des Motors, während die Leistung des Turbogenerators steigt. Die parallel zum Abgasturbolader umgeleitete, bei konventioneller Wastegate-Steuerung verlorene Abgasenergie kann somit rekuperiert werden. Abhängig von den entsprechenden Kennfeldern kann damit in einer erfindungsgemäßen Steuerung ein Betriebspunkt mit einer optimalen Gesamtleistung (Verbrennungskraftmaschine + Turbogenerator) bei gewünschtem Verbrauch bzw. mit niedrigerem Verbrauch bei gewünschter Gesamtleistung eingestellt werden.

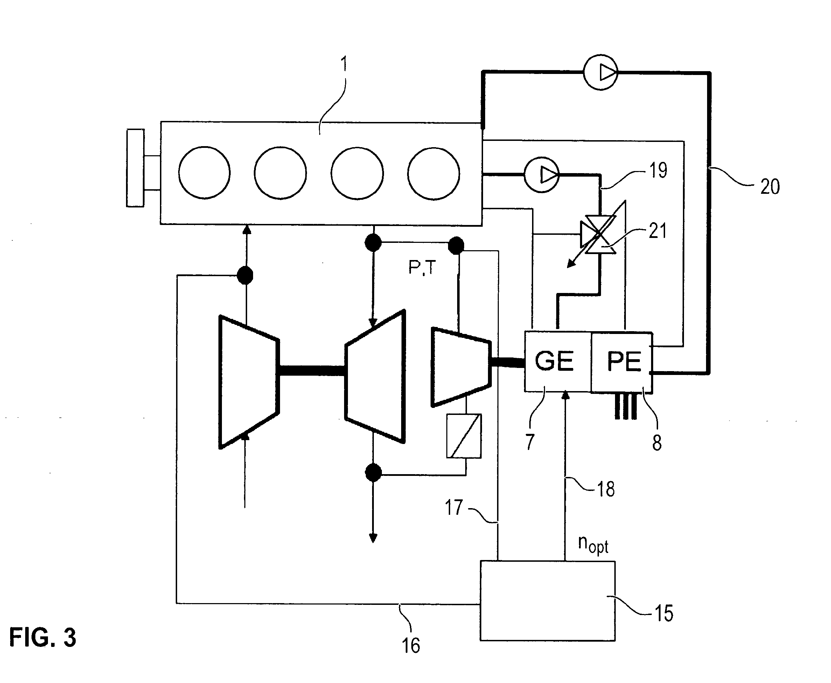

In Fig. 3 ist dabei eine erfindungsgemäße Steuerung 15 dargestellt. Eingangsgrößen der Steuerung sind Ladedruck und -temperatur, Abgasgegendruck und Abgasgegentemperatur, sowie die Drehzahl des Turbogenerators. Stellgröße ist die Optimaldrehzahl des Turbogenerators. Erfindungsgemäß kann dabei die Leistungselektronik 8 des Turbogenerators so angesteuert werden, dass der Turbogenerator auf seine Optimaldrehzahl eingeregelt wird.

Mit dem erfindungsgemäß parallel geschalteten Turbogenerator kann eine bestehende Regeleinrichtung für den Verbrennungsmotor 1 gegebenenfalls komplett ersetzt werden. Dabei bietet die parallele Anordnung erhebliche Dynamikvorteile gegenüber der seriellen Anordnung des Abgasturboladers, und erlaubt damit eine erhebliche schnellere Änderung des Abgasgegendruckes des Motors. Dabei kann der parallel geschaltete Turbogenerator die einzige Regeleinrichtung für den Luftstrom durch den Verbrennungsmotor darstellen. Die hierfür üblicherweise vorgesehene Drosselklappe kann damit entfallen. Dadurch entfallen die mit einer Drosselklappe verbundenen Strömungs-/Druckverluste im Luftpfad und der Wirkungsgrad der Verbrennungskraftmaschine erhöht sich. Ein solcher Einsatz des parallel geschalteten Turbogenerator als einzige Regeleinrichtung für den Luftstrom durch den Verbrennungsmotor ist dabei insbesondere bei einem Ottomotor denkbar.

Alternativ kann ein parallel geschalteter Turbogenerator und die hierdurch mögliche Änderung des Abgasgegendruckes des Motors auch mit einer konventionellen Regelungseinrichtung wie beispielsweise einer Drosselklappe kombiniert werden.

Wie in Fig. 3 weiterhin dargestellt wird, kann der Turbogenerator 5 in den Kühlkreislauf 19 sowie den Schmierölkreislauf 20 des Motors integriert werden. Die Kühlung des Turbogenerators ist dabei vergleichbar mit der Kühlung des Abgasturboladers, wobei die Kühlleistung jedoch üblicherweise etwas höher ist, was durch die zusätzlich nötige Kühlung des Generators bedingt ist. Dabei kann das Lager der Turbine und/oder das Turbinengehäuse mittels Öl oder Wasser gekühlt werden. Die Ansteuerung des Kühlkreislaufes erfolgt dabei beispielsweise anhand der Temperatur des Abgasturboladers.

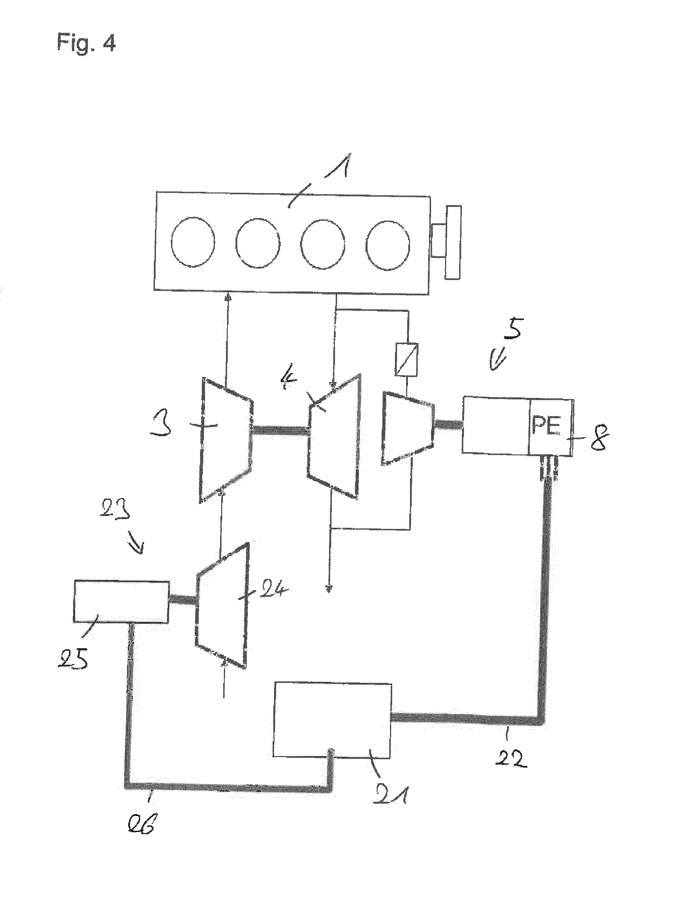

Die von dem Turbogenerator 5 erzeugte elektrische Energie kann dabei wie in Fig. 4 gezeigt in einer Batterie 21 gespeichert werden und/oder unmittelbar Verbrauchern zur Verfügung gestellt werden. Mit dieser Energie kann dabei ein zusätzlicher Elektromotor angetrieben werden.

In Fig. 4 ist eine weitere Ausführungsform der vorliegenden Erfindung gezeigt, bei welcher ein zusätzlicher Kompressor 23 vorgesehen ist, welcher im Ladeluftstrang angeordnet ist und unabhängig von der Drehzahl des Verbrennungsmotors Ladedruck zur Verfügung stellen kann. Der Kompressor 23 weist dabei einen Verdichter 24 auf, welcher über einen Elektromotor 25 angetrieben wird. Dieser kann über die von dem Turbogenerator 5 erzeugte elektrische Energie angetrieben werden.

Die von dem Turbogenerator erzeugte elektrische Energie kann dabei auch anderweitig genutzt, und insbesondere beliebigen elektrischen Verbrauchern zur Verfügung gestellt werden.

Das erfindungsgemäße Antriebssystem kann dabei insbesondere zum Antrieb von mobilen Arbeitsgeräten eingesetzt werden, und insbesondere in Anordnungen, in welchen der Verbrennungsmotor 1 zum Antrieb eines Hydrauliksystems eingesetzt wird. Die vorliegende Erfindung kann jedoch auch dann zum Einsatz kommen, wenn der Verbrennungsmotor 1 über einen mechanischen Antriebsstrang als Fahrantrieb genutzt wird.

Ein weiteres Einsatzgebiet ergibt sich bei stationären Anwendungen. Insbesondere kann der erfindungsgemäße Verbrennungsmotor dabei zum Antrieb eines Generators dienen. Besonders bevorzugt wird dabei ein Gasmotor als Verbrennungsmotor eingesetzt.

## Patentansprüche

1. Antriebssystem mit einem Verbrennungsmotor (1), einem Abgasturbolader (2) aus einer Turbine (4) und einem von der Turbine angetriebenen Verdichter (3), und mit einem Turbogenerator (5),
**dadurch gekennzeichnet,**
**dass** der Turbogenerator (5) parallel zur Turbine (4) des Abgasturboladers im Abgasstrang (11) des Verbrennungsmotors angeordnet ist.

2. Antriebssystem nach Anspruch 1, wobei es sich bei dem Verbrennungsmotor (1) um einen Dieselmotor oder einen Ottomotor handelt, und/oder wobei es sich um einen Gasmotor handelt.

3. Antriebssystem nach Anspruch 1 oder 2, mit einer Steuerung (15), welche den Turbogenerator (5) und insbesondere die Drehzahl des Turbogenerators ansteuert.

4. Antriebssystem nach Anspruch 3, wobei die Ansteuerung bevorzugt durch Ansteuerung der Leistungselektronik (8) des Generators (7) erfolgt.

5. Antriebssystem nach Anspruch 3 oder 4, wobei die Steuerung (15) den Turbogenerator in Abhängigkeit von Betriebsparametern des Verbrennungsmotors und/oder des Abgasturboladers ansteuert.

6. Antriebssystem nach einem der vorangegangenen Ansprüche, mit einer Motorsteuerung, welche den Massenstrom durch den Verbrennungsmotor und/oder den Ladedruck des Verbrennungsmotors durch Ansteuerung des Turbogenerators (5) einstellt, wobei der Turbogenerator vorzugsweise die einzige Regeleinrichtung für den Luftstrom durch den Verbrennungsmotor darstellt.

7. Antriebssystem nach einem der vorangegangenen Ansprüche, wobei das Kühlsystem des Turbogenerators an das Kühlsystem (19) des Verbrennungsmotors und/oder des Abgasturboladers angeschlossen ist.

8. Antriebssystem nach einem der vorangegangenen Ansprüche, wobei das Schmiermittelsystem des Turbogenerators an das Schmiermittelsystem (20) des Verbrennungsmotors und/oder des Abgasturboladers angeschlossen ist.

9. Antriebssystem nach einem der vorangegangenen Ansprüche, mit einem über einen Elektromotor (25) angetriebenen Kompressor (23) im Ladeluftstrang, wobei der Kompressor (23) bevorzugt stromaufwärts zum Verdichter (3) des Abgasturboladers (2) angeordnet ist.

10. Antriebssystem nach einem der vorangegangenen Ansprüche, wobei der Verbrennungsmotor (1) ein Hydrauliksystem antreibt, wobei es sich vorteilhafterweise um eine Arbeits- und/oder Fahrhydraulik handelt, wobei das Antriebssystem bevorzugt eine Steuerung des Hydrauliksystems aufweist, welche die Leistungsaufnahme und/oder -abgabe des Hydrauliksystems ansteuert, insbesondere durch Ansteuerung einer Verstellpumpe und/oder eines Verstellmotors und/oder einer Ventilsteuerung, wobei der Verbrennungsmotors bevorzugt so angesteuert wird, dass er mit einer konstanten Soll-Drehzahl arbeitet, wobei die Soll-Drehzahl zur Einstellung der Dynamikreserve über eine Steuerung einstellbar ist.

11. Antriebssystem nach einem der vorangegangenen Ansprüche, wobei der Verbrennungsmotor (1) ein Fahrwerk antreibt, wobei die Drehzahl und/oder das Drehmoment des Verbrennungsmotors bevorzugt in Abhängigkeit einer Vorgabe des Fahrers angesteuert wird.

12. Antriebssystem nach einem der vorangegangenen Ansprüche, wobei der Verbrennungsmotor (1) einen Generator antreibt, wobei es sich bei dem Verbrennungsmotor vorteilhafterweise um einen Gasmotor handelt.

13. Kombination aus einem Abgasturbolader und einem Turbogenerator für ein Antriebssystem nach einem der vorangegangenen Ansprüche.

14. Verfahrbares Arbeitsgerät und/oder Fahrzeug mit einem Antriebssystem nach einem der vorangegangenen Ansprüche, wobei das Antriebssystem vorteilhafterweise zum Antrieb eines Fahrwerks und/oder einer Arbeitsausrüstung dient, und/oder wobei das Antriebssystem mindestens eine Hydraulikpumpe eines Hydrauliksystems antreibt, wobei es sich bevorzugt bei dem verfahrbaren Arbeitsgerät um eine Erdbewegungsmaschine und/oder eine Transportmaschine und/oder eine Umschlagmaschine handelt, insbesondere um einen Kran oder Bagger.

15. Stationäres Arbeitssystem mit einem Antriebssystem nach einem der vorangegangenen Ansprüche, wobei der Verbrennungsmotor (1) bevorzugt einen Generator antreibt, wobei es sich bei dem Verbrennungsmotor vorteilhafterweise um einen Gasmotor handelt.
